# EUROPÄISCHE PATENTSCHRIFT

(11) **EP 0 949 210 B1**
(45) Veröffentlichungstag und Bekanntmachung des Hinweises auf die Patenterteilung: **24.01.2001**
(21) Anmeldenummer: 99103850.6
(22) Anmeldetag: 27.02.1999
(51) Int. Cl.: C03B 5/225, C03B 5/04, C03B 5/182, C03B 5/185, C03B 5/193, C03B 5/20

(54) **Verfahren zum Betrieb eines Glasschmelzofens und Glasschmelzofen für die Durchführung des Verfahrens**
Process for operating a glass melting furnace and glass melting furnace for carrying out the process
Procédé d'utilisation d'un four de fusion de verre et four de fusion de verre pour la mise en oeuvre du procédé

(30) Priorität: 06.04.1998 DE 19815326
(43) Veröffentlichungstag der Anmeldung: 13.10.1999
(73) Patentinhaber: Beteiligungen Sorg GmbH & Co. KG, D-97816 Lohr (DE)
(72) Erfinder: Sorg, Helmut, 63864 Glattbach (DE); Pieper, Helmut, 97816 Lohr am Main (DE)
(74) Vertreter: Zapfe, Hans, Dipl.-Ing.

(56) Entgegenhaltungen:
- EP-A- 0 410 338
- EP-A- 0 864 543
- DE-A- 3 903 016
- FR-A- 2 737 487
- GB-A- 2 204 310
- US-A- 4 882 736

## Beschreibung

Die Erfindung betrifft ein Verfahren zum Betrieb eines Glasschmelzofens, bei dem zwischen einem Schmelzbereich und einem Läuterbereich mit einer Läuterbank eine Strahlungsschutzwand angeordnet ist, die über dem Schmelzenspiegel der Glasschmelze mindestens einen Strömungskanal für eine Rückströmung mindestens eines Teils der Verbrennungsgase vom Läuterbereich zum Schmelzbereich freiläßt.

Ein derartiger Glasschmelzofen ist durch die DE 39 03 016 C2 bekannt. Er dient bevorzugt dazu, durch innigen Wärmeaustausch zwischen den Brennerabgasen einerseits und dem Beschickungsgut und der Glasschmelze andererseits das Flüssigbleiben des Glases bei Betriebsunterbrechungen zu gewährleisten und das Glas bei Wiederaufnahme des Betriebs schnell und mit hohem Wirkungsgrad wieder auf die erforderliche Verarbeitungstemperatur zu bringen. Dabei trägt eine erste, im Schmelzbereich befindliche, Strahlungsschutzwand, deren Unterkante knapp über dem Beschickungsgut liegt, zu dessen vollständigem Aufschmelzen durch die Gegenströmung der heißen Verbrennungsgase bei. Ein Strömungskanal für die Verbrennungsgase in einer zweiten, dem Läuterbereich unmittelbar vorgelagerte Strahlungsschutzwand bewirkt jedoch keinen nennenswerten Wärmeaustausch, da die Unterkante dieses Strömungskanals einen merklichen Abstand von der Glasschmelze hat.

Die bekannte Lösung besitzt einen in der Wannenmitte und vor der Läuterbank angeordneten schlecht kühlbaren Bodendurchlaß für die Glasschmelze. Solche Bodendurchlässe haben eine wesentlich geringere Breite als der Wannenboden bzw. als der Abstand der Seitenwände der Wanne und infolgedessen einen geringen Strömungsquerschniitt. Dadurch stellt sich in den Bodendurchlässen eine hohe Strömungsgeschwindigkeit ein, die zu einem hohen Verschleiß der die Bodendurchlässe umgebenden heißen Wände aus mineralischen Werkstoffen führt.

Durch die US-A-4 882 736 ist ein Glasschmelzofen bekannt, bei dem unterhalb des Beschickungsbereichs mit erheblichem Abstand vom Läuterbereich Bodenelektroden angeordnet sind, die in der Glasschmelze eine Aufwärtsströmung erzeugen, durch die dem Beschickungsgut von unten zusätzliche Schmelzwärme zugeführt wird. Wie die eingezeichneten Strömungspfeile erkennen lassen, hat die an dieser Stelle aufsteigende Strömung nicht nur keinen Einfluß auf die Vorgänge im Läuterbereich, sondern sie bremst auch cie Rückströmung der Glasschmelze und steht in keinerlei synergistischer Wechselwirkung mit der Gegenströmung der Verbrennungsgase, d.h., die Gase werden vor Erreichen der Aufwärtsströmung des Glases abgezogen. Das Beschickungsgut wird also nicht gleichzeitig bzw. am gleichen Ort von oben durch die Verbrennungsgase und von unten durch die Bodenelektroden aufgeheizt. Auch ist über den Bodenelektroden keine Strahlungsschutzwand angeordnet, deren Unterkante einen Strömungskanal für eine Gegenströmung der Verbrennungsgase bilden könnte.

Von diesen Bodenelektroden steigt der Wannenboden in Form einer langen Rampe allmählich auf die Höhe der Läuterbank an, auf deren Oberseite eine Stufe angeordnet ist. Die Stufe ist an der Knickstelle zwischen dem schrägen Wannenboden und der Läuterbank gewissermaßen "aufgesattelt". Die Stufe hat also eine Mengenregelungsfunktion und verstärkt nicht die Wirkung der weit entfernt davor im Beschickungsbereich angeordneten Bodenelektroden. Die hinter der Stufe befindliche Oberfläche der Läuterbank muß also einen größeren Abstand von der Schmelzenoberfläche haben, was der Wirkung der Läuterbank zuwider läuft. Bei diesem Stand der Technik ist es der Boden des Schmelzbereichs, der ein Strömungsmuster erzeugt, durch das heißes Glas an der Badoberfläche zurück zur schwimmende Chargenschicht strömt. Dabei wird aber eine Oberflächenströmung erzeugt, die ständig durch Brenner hocherhitztes Glas aus dem Läuterbereich in den Chargierbereich fördert. Dies erzwingt schwer kontrollierbare entgegengesetzte Strömungen oberhalb der Schwelle, denn letzten Endes wird ständig Chargiergut zugeführt, und geschmolzenes Glas muß aus dem Ofen abgeführt werden. Dies hat noch einen weiteren, ganz wesentlichen Nachteil: Bereits geläuterte, also hochreine Glasschmelze, wird wieder in den Chargier- und Schmelzbereich zurückgeführt, in Berührung mit dem Chargiergut gebracht und muß anschließend erneut geläutert werden.

Der Erfindung liegt daher die Aufgabe zugrunde ein Betriebsverfahren und einen Glasschmelzofen hierfür anzugeben, die bei denen die Vorteile des eingangs angegebenen Glasschmelzofens beibehalten werden, bei denen jedoch Vorkehrungen dahingehend getroffen werden, daß der Verschleiß von Wannenbausteinen zurückgeht, der Wirkungsgrad durch Wärmeausnutzung nicht verschlechtert, sondern ggf. noch weiter gesteigert wird, daß eine Rückströmung bereits geläuterter und sehr heißer Glasschmelze aus dem Läuterbereich in den Schmelzbereich unterdrückt und das Beschickungsgut auf seinem Wege möglichst frühzeitig aufgeschmolzen wird.

Die Lösung der gestellten Aufgabe erfolgt bei dem eingangs angegebenen Verfahren erfindungsgemäß dadurch, daß zwischen der Mitte des Schmelzbereichs und der Vorderseite der Läuterbank in der Glasschmelze mindestens eine Aufwärtsströmung erzeugt wird, die in der Glasschmelze vor Erreichen des Schmelzenspiegels in eine erste Teilströmung stromaufwärts in den Schmelzbereich und in eine zweite Teilströmung stromabwärts auf die Läuterbank unterteilt wird, wobei durch die zweite, stromabwärts gerichtete Teilströmung eine Rückströmung von Glasschmelze aus dem Läuterbereich in den Schmelzbereich verhindert wird.

Die Erfindung betrifft auch einen Glasschmelzofen mit einer Schmelzwanne mit einem Wannenboden und mit Brennern für eine mindestens teilweise Beheizung durch fossile Brennstoffe, bei dem zwischen einem Beschickungsende und einem Entnahmeende in Transportrichtung des Glases ein Schmelzbereich mit mindestens einer Abzugsöffnung für Verbrennungsgase, ein Läuterbereich mit Brennern und mit einer vom Wannenboden mit einer Vorderwand aufragenden Läuterbank und ein Homogenisierungsbereich angeordnet sind, wobei zwischen dem Schmelzbereich und dem Läuterbereich vor diesem eine Strahlungsschutzwand angeordnet ist, die oberhalb der Glasschmelze mindestens einen Strömungskanal für eine Gegenströmung der Verbrennungsgase vom Läuterbereich zum Schmelzbereich (3) freiläßt.

Die Lösung der gestellten Aufgabe erfolgt bei dem vorstehend angegeben Glasschmelzofen erfindungsgemäß dadurch, daß zwischen der Mitte des Schmelzbereichs und der Vorderseite der Läuterbank, in Transportrichtung der Glasschmelze gesehen, Mittel vorgesehen sind, durch die eine Aufwärtsströmung der Glasschmelze zum Schmelzenspiegel und an der Oberfläche der Glasschmelze eine Strömung des Glases stromaufwärts in Richtung auf das Beschickungsende einerseits und stromabwärts auf die Läuterbank andererseits erzeugbar sind.

Diese Aufwärtsströmung erfolgt von unten nach oben, also quer zur Summenströmmung der Glasschmelze, die im wesentlichen waagrecht vom Beschickungsende zum Entnahmeende verläuft, von örtlich überlagerten Einzelströmungen einmal abgesehen. Die Summenströmung ist daher proportional dem Ofendurchsatz unter Berücksichtigung der Ofengeometrie. Die Aufwärtsströmung oder auch eine Reihe von Aufwärtsströmungen sorgt dabei für einen definierten (ersten) Anteil der Oberflächen-Rückströmung zum Beschickungsende und einen weiteren definierten (zweiten) Anteil der Oberflächen-Vorwärtsströmung zum Läuterbereich, bildet aber auch eine äußerst wirksame Sperre gegen eine Rückströmung von bereits geläuterter und sehr heißer Glasschmelze aus dem Läuterbereich zum Schmelzbereich. Dabei spielt das Zusammenwirken mit der Strahlungsschutzwand eine entscheidende Rolle, die die Strahlungswärme der Brennerflammen im Läuterteil in diesem konzentriert und für die erforderliche hohe Läutertemperatur sorgt, deren Höhe (wie die aller anderen Temperaturen) von der Glasart abhängig ist.

Dennoch bleibt die Wirkung des definierten erste Anteils der Oberflächen--Rückströmung zum Beschickungsende erhalten, die darin besteht, daß das Beschickungsgut von unten beheizt und dadurch schneller aufgeschmolzen, und gleichzeitig an einem allzu weiten Vordringen gehindert wird.

Die Mittel zur Erzeugung dieses Effekts können im Zuge unterschiedlicher Ausgestaltungen des Erfindungsgegenstandes - entweder einzeln oder in Kombination - in folgendem bestehen:
a) in einer Merkmalskombination aus Bubblern im Wannenboden und einer nachfolgende Stufe,
b) in einer Merkmalskombination aus Bubblern und Heizelektroden im Wannenboden ohne nachfolgende Stufe,
c) in einer Merkmalskombination aus Bubblern im Wannenboden und in Heizelektroden über der Stufe,
d) in einer Stufe, die sich mit geringerer Höhe als die der Läuterbank von deren Vorderseite in Richtung auf das Beschickungsende erstreckt,
e) in einer Merkmalskombination aus einer Stufe und über dieser angeordneten Heizelektroden,
f) in einer Merkmalskombination aus einer Stufe (17) und aus in dieser angeordneten Bubblern (18).
g) darin daß bei Verwerdung einer der Vorderseite der Läuterbank vorgelagerten, vom Wannenboden aufragende Stufe diese Stufe
   g1) sich über die gesamte Breite des Wannenbodens (15) erstreckt,
   g2) eine Höhe aufweist, die zwischen dem 0,25-Fachen und dem 0,75-Fachen der Höhe der Läuterbank gegenüber dem Wannenboden beträgt,
   g3) sich sowohl entgegen der horizontalen Strömungsrichtung der Glasschmelze als auch bis unter die Strahlungsschutzwand erstreckt.

Die Wirkung kann noch dadurch verstärkt werden daß:
h) die Strahlungsschutzwand mit ihrer Unterkante in die Glasschmelze eintaucht und dort oberhalb der vom Wannenboden aufragenden Stufe mindestens eine spaltförmige Durchströmöffnung für die Glasschmelze freiläßt,
i) sich die Strahlungsschutzwand auf der Stufe mittels mindestens einer Stütze abstützt, die zwischen jeweils zwei Durchströmöffnungen angeordnet ist, derart, daß die Summenbreite aller Durchströmöffnungen möglichst weitgehend der Breite des Wannenbodens entspricht und die Durchströmöffnungen gleichmäßig über diese Breite verteilt sind,
j) zwischen der Rückseite der Strahlungsschutzwand und der Vorderseite der Läuterbank ein senkrechter Spalt für den Durchtritt der Glasschmelze vorhanden ist, in welchem Spalt mindestens zwei Heizelektroden angeordnet sind.
k) die Stufe sich mindestens teilweise entgegen der horizontalen Strömungsrichtung der Glasschmelze bis unter die zweite Strahlungsschutzwand erstreckt.

Es ist dabei besonders vorteilhaft, wenn innerhalb des Schmelzbereichs zwischen der Abzugsöffnung und der dem Läuterbereich vorgelagerten Strahlungsschutzwand eine weitere Strahlungsschutzwand angeordnet ist, die den Schmelzbereich in ein erstes Abteil mit der Abzugsöffnung und in ein zweites Abteil unterteilt und eine Unterkante aufweist, die oberhalb des Beschickungsguts und der Glasschmelze einen zusätzlichen, in Reihe geschalteten Strömungskanal für eine Gegenströmung der Verbrennungsgase vom zweiten Abteil zum ersten Abteil und zur Abzugsöffnung freiläßt. Hierdurch wird die Wärmeausnutzung nochmals deutlich verbessert.

Der Ausdruck "Reihe(n)" von Heizelektroden und Bubblern besagt nicht, daß diese gleiche Quer- und/oder Längsabstände voneinander haben müssen. Vielmehr kann es - auch mit besonderem Vorteil - möglich sein, durch örtlich unterschiedliche Abstände die "Flächendichten" von Brennern und Bubblern so zu beeinflussen, daß die örtlichen Wärmebilanzen und Strömungsmuster optimal eingestellt werden können.

Der Ausdruck "unterhalb der Strahlungsschutzwand" besagt nicht, daß es sich um eine Anordnung innerhalb der lotrechten Projektion der Strahlungsschutzwand auf den Wannenboden oder die Stufe handeln muß. Vielmehr schließt diese Definition die Möglichkeit ein, daß die genannten "Mittel, durch die in der Glasschmelze eine Aufwärtsströmung des Glases" erzeugbar ist, sich auch stromaufwärts und stromabwärts der besagten zweiten Strahlungsschutzwand erstrecken können, je nachdem, wie dies die optimalen Abstände der Komponenten dieser "Mittel" erfordern.

Mit der erfindungsgemäßen Lösung sind folgende Vorteile verbunden:
1. Vermeidung von engen Bodendurchlässen mit üblicherweise engen Querschnitten, großer Verschleißanfälligkeit und von Einbauten zur intensiven Kühlung,
2. Hohe Sperrwirkung gegen:
   a) Eindringen von Beschickungsgut in der Läuterbereich und
   b) Rückströmung von Schmelze aus dem Läuterbereich in den Schmelzbereich,
3. guter Wärmeaustausch zwischen den Gas- und Glasströmungen (Gegenstrom) an den jeweils zusammenfallenden engsten Stellen von Gas- und Glasströmungen, und
4. starke Vorwärmung der Schmelze vor dem übertritt auf die Läuterbank.

Durch die FR 2 737 487 A1 ist es zwar bekannt, vor einer wall- oder trapezförmigen Schwelle, die vom Wannenboden aufragt, je eine Reihe von Bubblern und Heizelektroden und hinter der Schwelle eine weitere Reihe von Heizelektroden anzuordnen, um in der Glasschmelze sog. "Strömungswalzen" mit Sperrwirkung zu erzeugen. Da die Ofendecke jedoch glatt ist und keine Strahlungsschutzwände aufweist, fehlt notwendigerweise das erfindungsgemäße Zusammenwirken der Elektroden und Bubbler mit einer Strahlungsschutzwand. Auch ist die Schwelle keine Läuterbank; dafür ist ihre Oberseits in Strömungsrichtung viel zu kurz, und diese Oberseite hat einen viel zu großen Abstand vom Schmelzenspiegel, da die Höhe der Schwelle maximal die Hälfte des Schmelzenpegels erreichen darf. Die sehr tiefe Läuterzone beginnt ausdrücklich auch erst hinter der Schwelle. Die obigen Vorteile werden damit nicht erreicht - zumindest nicht in der Summe.

Ausführungsbeispiele des Erfindungsgegenstandes werden nachfolgend anhand der Figuren 1 bis 7 näher erläutert.

Es zeigen:
- Figur 1: einen Längsschnitt durch einen Glasschmelzofen mit Bubblern, Heizelektroden, Stufe und Läuterbank,
- Figur 2: einen vergrößerten Ausschnitt aus Figur 1,
- Figur 3: eine erste Variante des Gegenstandes nach Figur 2 mit Bubblern, Heizelektroden und Läuterbank, jedoch ohne Stufe,
- Figur 4: eine zweite Variante des Gegenstandes nach Figur 2 mit Heizelektroden, Stufe und Läuterbank, jedoch ohne Bubbler,
- Figur 5: eine dritte Variante des Gegenstandes nach Figur 2 mit Bubblern, Stufe und Läuterbank, jedoch ohne Heizelektroden,
- Figur 6: einen teilweisen Längsschnitt durch eine vierte Variante des Gegenstandes nach Figur 2 mit Bubblern, Stufe und Läuterbank und mit Heizelektroden auf der Stufe, und
- Figur 7: einen teilweisen Längsschnitt durch eine fünfte Variante des Gegenstandes nach Figur 2 ohne Bubbler, aber mit Stufe und Läuterbank und mit waagrechten Heizelektroden über der Stufe.

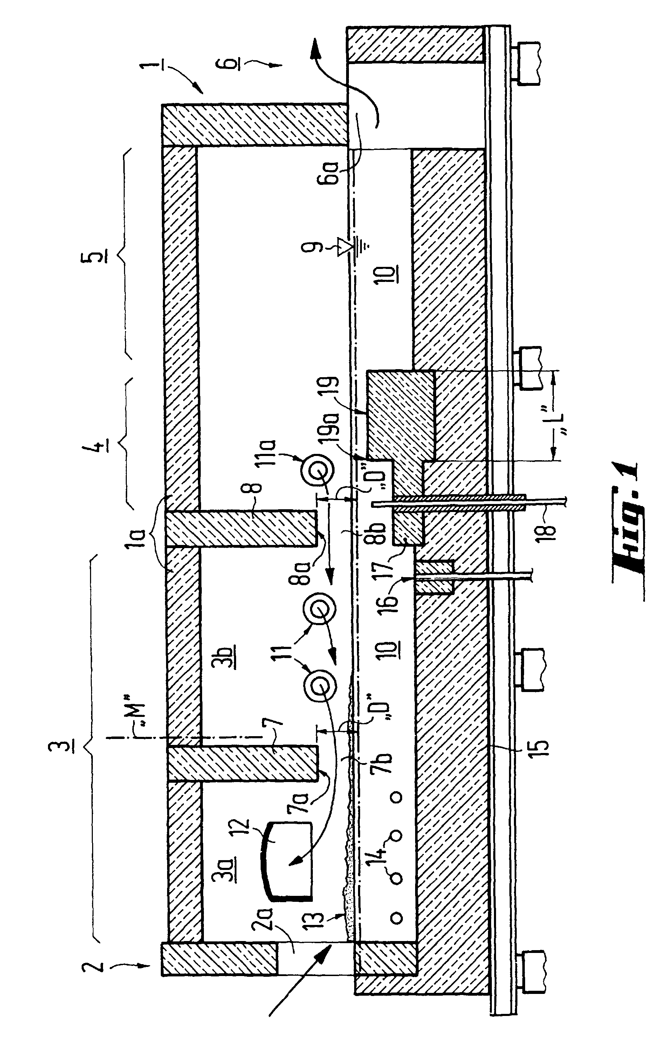

In Figur 1 ist ein Längsschnitt durch einen Glasschmelzofen 1 dargestellt, der - ausgehend von einem Beschickungsende 2 mit einer Chargieröffnung 2a - einen Schmelzbereich 3 mit Abteilen 3a und 3b, einen Läuterbereich 4 und einen Homogenisierungsbereich 5 besitzt und in einem Entnahmeende 6 mit einem überlauf 6a zu nicht gezeigten und bekannten Weiterverarbeitungsstationen endet. Die Mitte des Schmelzbereichs ist durch eine strichpunkterte Linie "M" angedeutet. Jenseits dieser Mitte "M" werden die beschriebenen Mittel zu Erzeugung der Aufwärtsströmung in der Glasschmelze eingesetzt.

Im Schmelzbereich 3 befindet sich zwischen dessen Abteilen 3a und 3b eine erste Strahlungsschutzwand 7, und zwischen dem Schmelzbereich 3 und dem Läuterbereich 4 befindet sich eine zweite Strahlungsschutzwand 8. Beide Strahlungsschutzwände 7 und 8 besitzen Unterkanten 7a und 8a, die oberhalb des Schmelzenspiegels 9 der Glasschmelze 10 Abstände "D" freilassen, die nicht notwendigerweise gleich groß sein müssen. Durch diese Abstände "D" werden Strömungskanäle 7b und 8b für die Rückströmung von Verbrennungsgasen gebildet. Der Anschluß an die Ofendecke 1a ist lückenlos.

Brenner 11, die Querflammen erzeugen, sind paarweise gegenüberliegend im Abteil 3b und Brenner 11a im Läuterbereich 4 angeordnet, und auch deren Anzahl und räumliche Anordnung ist nicht auf die Darstellung in Figur 1 beschränkt. Die heißen Abgase der Brenner 11 und 11a strömen durch den Strömungskanal 7b und zum Teil auch durch den Strömungskanal 8b in Richtung der Pfeile zu einer Abzugsöffnung 12

Im Schmelzbereich 3 befindet sich auf dem Schmelzenspiegel 9 Beschikkungsgut 13, dessen Menge pro Flächeneinheit durch den Aufschmelzprozess in Richtung auf die Strahlungsschutzwand 8 abnimmt. Dieser Aufschmelzprozeß erfolgt von oben durch die heißen Abgase der Brenner 11 und 11a und kann - muß aber nicht - im Abteil 3a durch Elektroden 14 im Bodenbereich unterstützt werden. Der Betrieb der Elektroden 14 kann auch zeitlich begrenzt, z.B. zu Aufheizzwecken, erfolgen.

Im Bereich der Strahlungsschutzwand 8 befinden sich im oder über dem Wannenboden 15 eine Reihe von Bubblern 16, eine Stufe 17 mit einer Reihe von Heizelektroden 13 und eine Läuterbank 19. Die Länge "L" der Läuterbank 19 bemißt sich nach der Strömungsgeschwindigkeit der Glasschmelze und nach der erforderlichen Verweilzeit der Schmelze auf der Läuterbank und ist auch vcn der Temperatur und/oder von der Glaszusammensetzung (z.B. hoch- oder niedrigschmelzende Gläser, Verdampfungsverhalten von leichtsiedenden Komponenten, etc.) abhängig.

Bei den Bubblern 16, der Stufe 17 und/oder den Heizelektroden 18 handelt es sich um Mittel, durch die in der Glasschmelze 10 eine Aufwärtsströmung des Glases in Richtung auf die Gegenströmung der Verbrennungsgase unterhalb der zweiten Strahlungsschutzwand 8 und in Richtung auf die Läuterbank 19 erzeugbar ist.

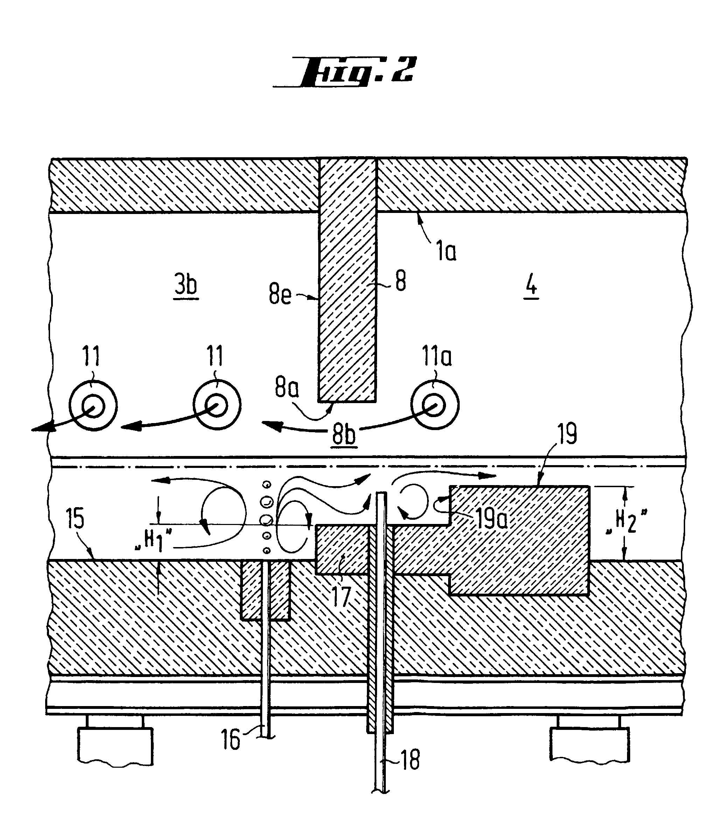

In Figur 2 werden gleiche Bezugszeichen wie bisher verwendet. Die vom Wannenboden 15 aufragende Stufe 17 erstreckt sich über die gesamte Breite des Wannenbodens 15 und weist eine Höhe "H1" auf, die zwischen dem 0,25-Fachen und dem 0,75-Fachen der Höhe "H2" der Läuterbank 19 gegenüber dem Wannenboden 15 beträgt. Sie erstreckt sich mit ihrer stromaufwärts gelegenen rechtwinkligen Kante bis unter die Vorderseite 8e der zweiten Strahlungsschutzwand 8. Die sich ergebenden Strömungskomponenten sind durch Pfeile angedeutet.

Wie bereits festgestellt, besagt der Ausdruck "unterhalb der Strahlungsschutzwand" nicht, daß es sich um eine Anordnung innerhalb der lotrechten Projektion der Strahlungsschutzwand 8 auf den Wannenboden 15 bzw. auf die Stufe 17 handeln muß. Vielmehr schließt diese Definition die Möglichkeit ein, daß die genannten "Mittel", durch die in der Glasschmelze eine Aufwärtsströmung des Glases erzeugt wird, sich auch stromaufwärts und stromabwärts der besagten zweiten Strahlungsschutzwand 8 erstrecken können, je nachdem, wie dies die optimalen Abstände der Komponenten dieser "Mittel" erfordern.

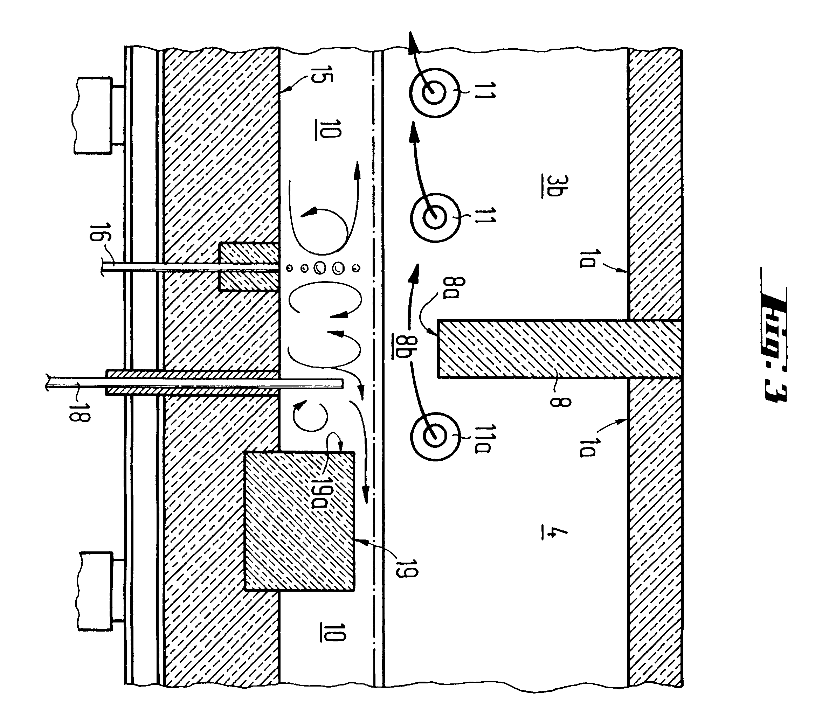

Bei dem Ausführungsbeispiel nach Figur 3 wurde die Stufe weggelassen, d.h., die Mittel zur Erzeugung der Aufwärtsströmung des Glases bestehen in diesem Falle aus je einer Reihe von Bubblern 16 und Heizelektroden 18, die im Wannenboden 15 angeordnet und der senkrechten Vorderseite 19a der Läuterbank 19 vorgelagert sind. Die sich ergebenden Strömungskomponenten sind durch Pfeile angedeutet.

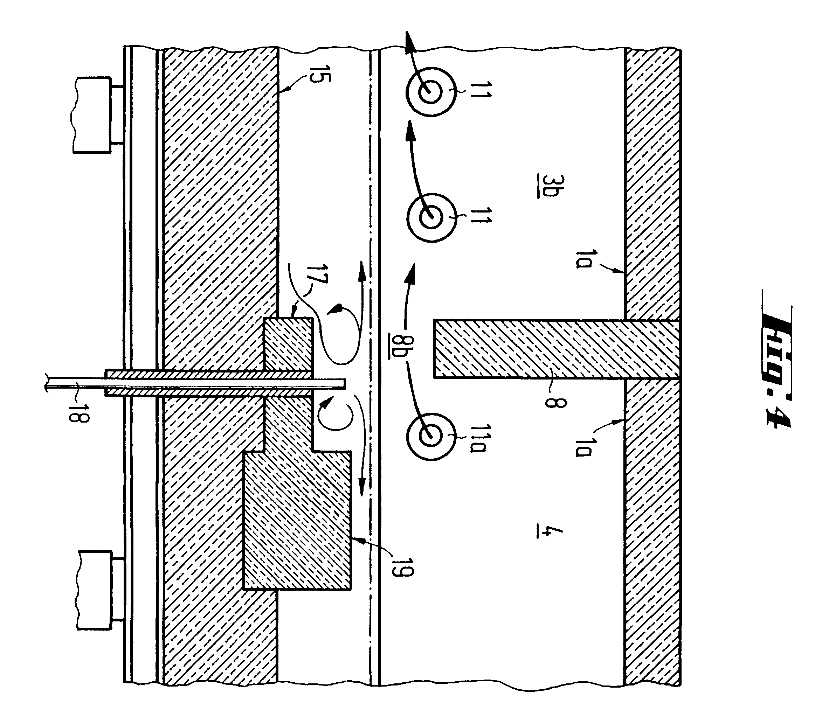

Bei dem Ausführungsbeispiel nach Figur 4 wurde die Reihe von Bubblern weggelassen, d.h., die Mittel zur Erzeugung der Aufwärtsströmung des Glases bestehen in diesem Falle aus der Stufe 17 mit einer Reihe von Heizelektroden 18, die auf der Stufe 17 angeordnet und der senkrechten Vorderseite 19a der durch die Stufe 17 in der Höhe verkürzten Läuterbank 19 vorgelagert sind. Die sich ergebenden Strömungskomponenten sind durch Pfeile angedeutet.

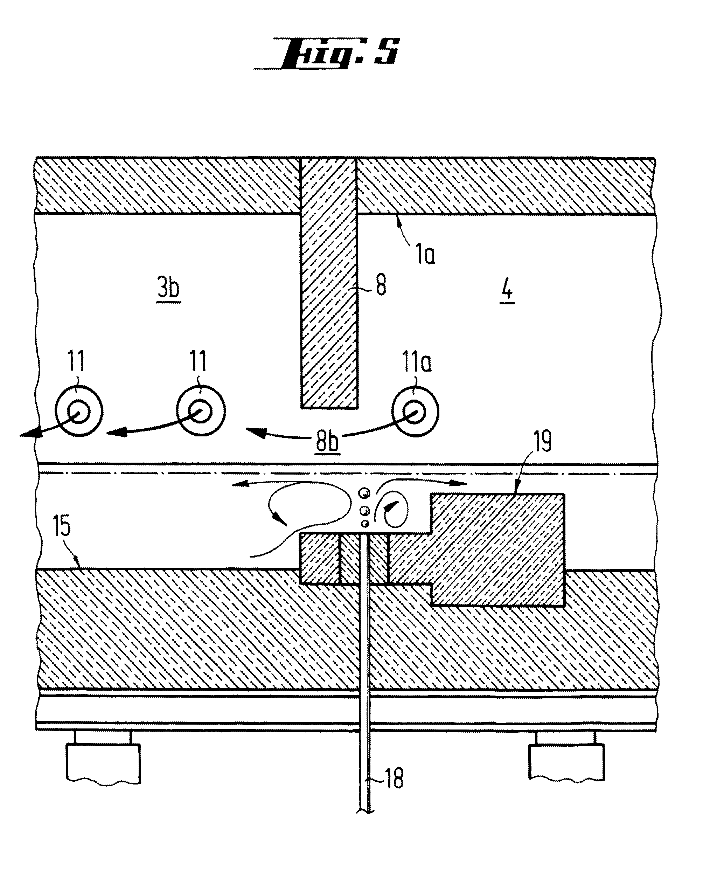

Bei dem Ausführungsbeispiel nach Figur 5 wurde die Reihe von Heizelektroden weggelassen, d.h., die Mittel zur Erzeugung der Aufwärtsströmung des Glases bestehen in diesem Falle aus der Stufe 17 mit einer Reihe von Bubblern 16, die in der Stufe 17 angeordnet und der senkrechten Vorderseite 19a der durch die Stufe 17 in der Höhe verkürzten Läuterbank 19 vorgelagert sind. Die sich ergebenden Strömungskomponenten sind durch Pfeile angedeutet.

Wie bereits beschrieben, führt der Erfindungsgegenstand zu einer Oberflächen-Rückströmung heißer Glasschmelze aus dem Bereich der Bubbler und/oder Heizelektroden in Richtung auf das Beschickungsende 2 unmittelbar unterhalb des in Gegenrichtung wandernden Beschickungsguts. Dadurch erfolgt eine äußerst wirksame Zwei-Seiten-Beheizung des Beschickungsguts: Von oben durch die Gegenströmung der heißen Brennergase und von unter durch die Gegenströmung heißer Glasschmelze. Damit ist sichergestellt, daß kein unaufgeschmolzenes Beschickungsgut, sei es Gemenge oder seien es Scherben, ggf. auch im Gemisch, den Läuterbereich erreicht.

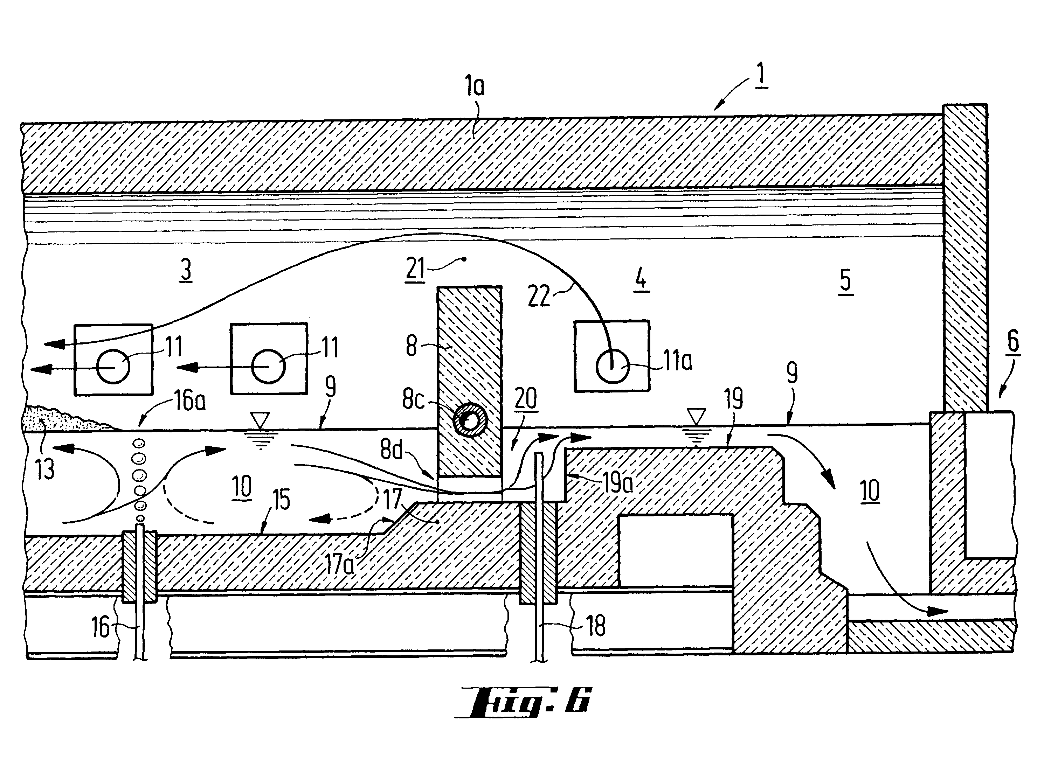

In Figur 6 ist eine weitere Variante dargestellt, bei der die Strahlungsschutzwand 8, die mit einer Kühleinrichtung 8c versehen ist, in die Glasschmelze 10 eintaucht und unterhalb ihrer Unterkante mehrere waagrechte spaltförmige Durchströmöffnungen 8d freiläßt, die unter Zwischenschaltung von Stützen gleichmäßig über die gesamte Wannenbreite verteilt sind. Wie bei den bisherigen Beispielen auch verläuft die Summenströmung des Glases von links nach rechts "stromabwärts" und die Summenströmung der Verbrennungsgase von rechts nach links, in bezug auf die Glasströmung also "stromaufwärts".

Der Läuterbank 19 im Läuterbereich 4 ist auch hier unterhalb der Strahlungsschutzwand 8 eine vom Wannenboden 15 aufragende Stufe 17 vorgelagert und dieser wiederum im Schmelzbereich 3 eine quer zur Wanne verlaufende Reihe von Bubblern 16. Hierdurch entsteht beiderseits eines Blasenvorhangs 16a und in diesem eine überlagerte Aufwärtsströmung mit Walzencharakter im Sinne der an dieser Stelle eingezeichneten Strömungspfeile. Dadurch entsteht u.a. eine stromaufwärts, d.h. zum hier nicht gezeigten Beschickungsende gerichtete Strömungskomponente, die das Beschickungsgut 13 von unten aufheizt, dieses aber gleichzeitig daran hindert, den Bubblerbereich zu überfahren. Etwaige Rückströmungen im Bereich des Wannenbodens sind durch die gestrichelten Pfeile angedeutet. Auch durch die in diesem Fall schräge Vorderseite 17a der Stufe 17 wird eine Aufwärtsströmung der Glasschmelze 10 erzeugt.

Zwischen dem eingetauchten Teil der Strahlungsschutzwand 8 und der Vorderseite der Läuterbank 19 wird über der Stufe 17 ein senkrechter Spalt 20 gebildet, der sich gleichfalls über die gesamte Wannenbreite erstreckt und in dem sich eine quer zur Wanne verlaufende Reihe von Heizelektroden 18 befindet. Diese verstärken die Aufwärtsströmung der Glasschmelze 10, was durch die an dieser Stelle eingezeichneten Strömungspfeile angedeutet ist. Dadurch wird eine Rückströmung der bereits geläuterten Glasschmelze 10 vom Läuterbereich 4 zum Schmelzbereich 3 verhindert, also eine Vermischung bereits geläuterter Glasschmelze, die oberhalb der Läuterbank 19 die höchste vorkommende Temperatur aufweist, mit noch nicht geläuterter, relativ kälterer Glasschmelze.

Die Verbrennungsgase der im Läuterbereich 4 angeordneten Brenner 11a, von denen nur einer gezeigt ist, strömen hierbei über einen oberen Strömungskanal 21 etwa in Richtung des Pfeils 22 und vereinigen sich im Schmelzteil 3 mit den Verbrennungsgasen der dort vorhandenen Brenner 11. Die Gesamtmenge der Verbrennungsgase beheizt hierbei zusätzlich das Beschickungsgut 13 von oben, wozu allerdings gesagt werden muß, daß die Beheizung der Schmelze und/oder des Beschickungsguts von oben durch die Gasstrahlung der Brennerflammen überwiegt. In diesem Falle wird durch den kombinatorischen Effekt von Bubblern 16, Stufe 17, Elektroden 18, Strahlungsschutzwand 8 und Vorderseite der Läuterbank 19 eine klare Trennung der Vorgänge im Schmelzbereich und im Läuterbereich erzielt, und zusätzlich wird die Energie der Strahlungswärme durch die Strahlungsschutzwand 8 im Läuterbereich 4 und im Homogenisierungsbereich 5 konzentriert.

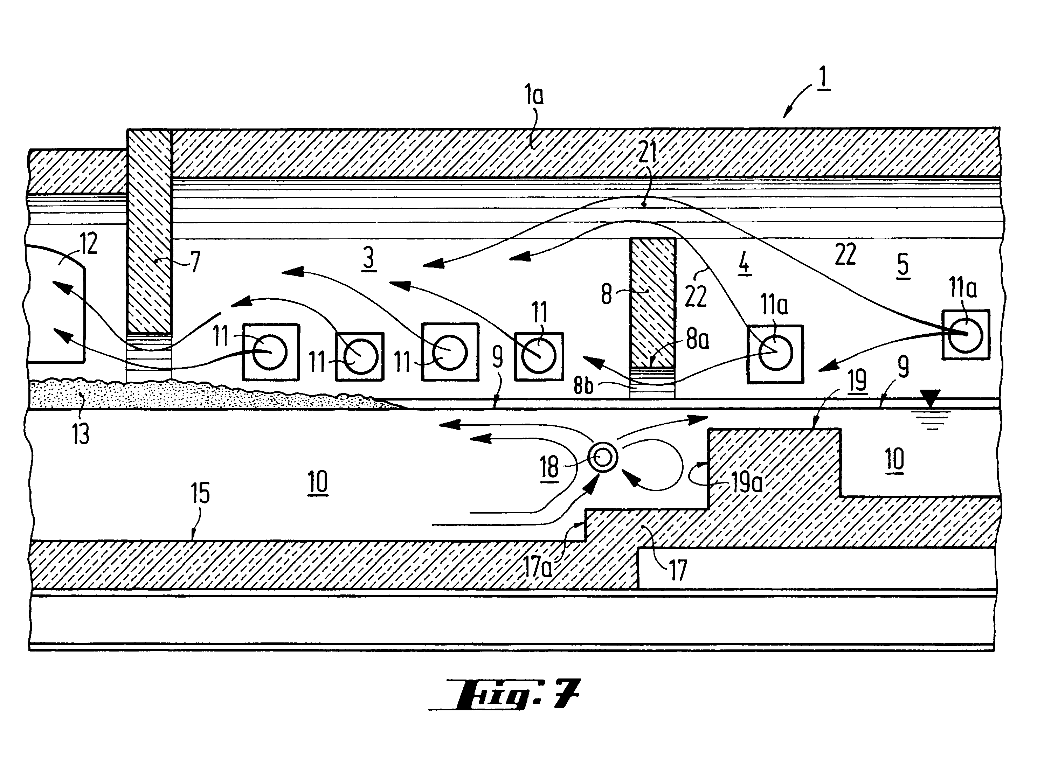

In Figur 7 ist wiederum eine weitere Variante dargestellt, bei der die Strahlungsschutzwand 8 nicht in die Glasschmelze 10 eintaucht, sondern mit einer bogenförmigen Unterkante 8a oberhalb des Schmelzenspiegels 9 endet und darunter einen Strömungskanal 8b für einen Teil der aus dem Läuterbereich 4 und dem Homogenisierungsbereich 5 kommenden Verbrennungsgase freiläßt. Wie bei den bisherigen Beispielen auch verläuft die Summenströmung des Glases von links nach rechts "stromabwärts" und die Summenströmung der Verbrennungsgase von rechts nach links, in bezug auf die Glasströmung also "stromaufwärts".

Der Läuterbank 19 im Läuterbereich 4 ist auch hier unterhalb der Strahlungsschutzwand 8 eine vom Wannenboden 15 aufragende Stufe 17 vorgelagert, und oberhalb dieser befinden sich mehrere Elektroden 18, von denen nur eine sichtbar ist und die - wie in Figur 7 gezeichnet - paarweise als waagrechte Wandelektroden (senkrecht zur Zeichenebene) ausgeführt sind, aber auch senkrecht von der Stufe (und parallel zur Zeichenebene wie in Figur 6 gezeichnet) aufragen können. Hierdurch entsteht beiderseits der Elektroden eine überlagerte Aufwärtsströmung mit Walzencharakter im Sinne der an dieser Stelle eingezeichneten Strömungspfeile. Dadurch entsteht u.a. eine stromaufwärts, d.h. zum hier nicht gezeigten Beschickungsende gerichtete Strömungskomponente, die das Beschickungsgut 13 von unten aufheizt, dieses aber gleichzeitig daran hindert, den Elektrodenbereich zu überfahren. Auch durch die in diesem Fall senkrechte Vorderseite 17a der Stufe 17 wird eine Aufwärtsströmung der Glasschmelze 10 erzeugt.

Auch dadurch wird eine Rückströmung der bereits geläuterten Glasschmelze 10 vom Läuterbereich 4 zum Schmelzbereich 3 verhindert, also eine Vermischung bereits geläuterter Glasschmelze, die oberhalb der Läuterbank 19 die höchste vorkommende Temperatur aufweist, mit noch nicht geläuterter, relativ kälterer Glasschmelze.

Die Verbrennungsgase der im Läuterbereich 4 angeordneten Brenner 11a, von denen nur zwei gezeigt sind, strömen hierbei zusätzlich über einen oberen Strömungskanal 21 etwa in Richtung der Pfeile 22 und vereinigen sich im Schmelzteil 3 mit den Verbrennungsgasen der dort vorhandenen Brenner 11. Die Gesamtmenge der Verbrennungsgase beheizt hierbei zusätzlich das Beschickungsgut 13 von oben, wozu allerdings gesagt werden muß, daß die Beheizung der Schmelze und/oder des Beschickungsguts von oben durch die Gasstrahlung der Brennerflammen weitaus größer ist als der konvektive Wärmeübergang. In diesem Falle wird durch den kombinatorischen Effekt der Stufe 17, der Elektroden 18, der Strahlungsschutzwand 8 und der Vorderseite 19a der Läuterbank 19 eine klare Trennung der Vorgänge im Schmelzbereich und im Läuterbereich erzielt, und zusätzlich wird die Energie der Strahlungswärme durch die Strahlungsschutzwand 8 im Läuterbereich 4 und im Homogenisierungsbereich 5 konzentriert.

Es ist nicht zwingend erforderlich, daß die Brenner 11 und 11a paarweise gegenüberliegend angeordnet sind; sie können auch in Längsrichtung der Wanne versetzt zueinander abgeordnet sein.

### Bezugszeichen-Liste:

- 1: Glasschmelzofen
- 1a: Ofendecke
- 2: Beschickungsende
- 2a: Chargieröffnung
- 3: Schmelzbereich
- 3a: Abteil
- 3b: Abteil
- 4: Läuterbereich
- 5: Homogenisierungsbereich
- 6: Entnahmeende
- 6a: überlauf
- 7: erste Strahlungsschutzwand
- 7a: Unterkante
- 7b: Strömungskanal
- 8: zweite Strahlungsschutzwand
- 8a: Unterkante
- 8b: Strömungskanal
- 8c: Kühleinrichtung
- 8d: Durchströmöffnung
- 8e: Vorderseite
- 9: Schmelzenspiegel
- 10: Glasschmelze
- 11: Brenner
- 11a: Brenner
- 12: Abzugsöffnung
- 13: Beschickungsgut
- 14: Elektroden
- 15: Wannenboden
- 16: Bubbler
- 16a: Blasenvorhang
- 17: Stufe
- 17a: Vorderseite
- 18: Heizelektroden
- 19: Läuterbank
- 19a: Vorderseite
- 20: Spalt
- 21: Strömungskanal
- 22: Pfeil

Abstände "D"
Länge "L"
Höhe "H1"
Höhe "H2"

## Patentansprüche

1. Verfahren zum Betrieb eines Glasschmelzofens, bei dem zwischen einem Schmelzbereich (3) und einem Läuterbereich (4) mit einer Läuterbank (19) eine Strahlungsschutzwand (8) angeordnet ist, die über dem Schmelzenspiegel (9) der Glasschmelze (10) mindestens einen Strömungskanal (8b, 21) für eine Rückströmung mindestens eines Teils der Verbrennungsgase vom Läuterbereich (4) zum Schmelzbereich (3) freiläßt, **dadurch gekennzeichnet**, daß zwischen der Mitte des Schmelzbereichs (3) und der Vorderseite (19a) der Läuterbank (19) in der Glasschmelze (10) mindestens eine Aufwärtsströmung erzeugt wird, die in der Glasschmelze (10) vor Erreichen des Schmelzenspiegels (9) in eine erste Teilströmung stromaufwärts in den Schmelzbereich (3) und in eine zweite Teilströmung stromabwärts auf die Läuterbank (19) unterteilt wird, wobei durch die zweite, stromabwärts gerichtete Teilströmung eine Rückströmung von Glasschmelze (10) aus dem Läuterbereich (4) in den Schmelzbereich (3) verhindert wird.

2. Glasschmelzofen mit einer Schmelzwanne mit einem Wannenboden (15) und mit Brennern (11, 11a) für eine mindestens teilweise Beheizung durch fossile Brennstoffe, bei dem zwischen einem Beschickungsende (2) und einem Entnahmeende (6) in Transportrichtung des Glases ein Schmelzbereich (3) mit mindestens einer Abzugsöffnung (12) für Verbrennungsgase, ein Läuterbereich (4) mit Brennern (11a) und mit einer vom Wannenboden (15) mit einer Vorderwand (19a) aufragenden Läuterbank (19) und ein Homogenisierungsbereich (5) angeordnet sind, wobei zwischen dem Schmelzbereich (3) und dem Läuterbereich (4) vor diesem eine Strahlungsschutzwand (8) angeordnet ist, die oberhalb der Glasschmelze (10) mindestens einen Strömungskanal (8b, 21) für eine Gegenströmung der Verbrennungsgase vom Läuterbereich (4) zum Schmelzbereich (3) freiläßt, **dadurch gekennzeichnet**, daß zwischen der Mitte des Schmelzbereichs (3) und der Vorderseite (19a) der Läuterbank (19), in Transportrichtung der Glasschmelze (10) gesehen, Mittel (16, 17, 18) vorgesehen sind, durch die eine Aufwärtsströmung der Glasschmelze (10) zum Schmelzenspiegel (9) und an der Oberfläche der Glasschmelze (10) eine Strömung des Glases stromaufwärts in Richtung auf das Beschickungsende (2) einerseits und stromabwärts auf die Läuterbank (19) andererseits erzeugbar sind.

3. Glasschmelzofen nach Anspruch 2, **dadurch gekennzeichnet**, daß die Mittel zur Erzeugung der Aufwärtsströmung der Glasschmelze quer zur konstruktiv vorgegebenen Summenströmung der Glasschmelze (10) ausgewählt sind aus der Merkmalskombination Bubbler (16) im Wannenboden (15) und nachfolgende Stufe (17).

4. Glasschmelzofen nach Anspruch 2, **dadurch gekennzeichnet**, daß die Mittel zur Erzeugung der Aufwärtsströmung der Glasschmelze quer zur konstruktiv vorgegebenen Summenströmung der Glasschmelze (10) ausgewählt sind aus der Merkmalskombination Bubbler (16) und Heizelektroden (18) im Wannenboden (15) ohne nachfolgende Stufe (17).

5. Glasschmelzofen nach Anspruch 2, **dadurch gekennzeichnet**, daß die Mittel zur Erzeugung der Aufwärtsströmung der Glasschmelze quer zur konstruktiv vorgegebenen Summenströmung der Glasschmelze (10) ausgewählt sind aus der Merkmalskombination Bubbler (16) im Wannenboden (15) und Heizelektroden (18) über einer nachfolgenden Stufe (17).

6. Glasschmelzofen nach Anspruch 2, **dadurch gekennzeichnet**, daß die Mittel zur Erzeugung der Aufwärtsströmung der Glasschmelze quer zur konstruktiv vorgegebenen Summenströmung der Glasschmelze (10) ausgewählt sind aus der Merkmalskombination eine Stufe (17) die sich mit geringerer Höhe als die der Läuterbank (19) von deren Vorderseite (19a) in Richtung auf das Beschickungsende (2) erstreckt.

7. Glasschmelzofen nach Anspruch 2, **dadurch gekennzeichnet**, daß die Mittel zur Erzeugung der Aufwärtsströmung der Glasschmelze quer zur konstruktiv vorgegebenen Summenströmung der Glasschmelze (10) ausgewählt sind aus der Merkmalskombination eine Stufe (17) mit über dieser angeordneten Heizelektroden (18).

8. Glasschmelzofen nach Anspruch 2, **dadurch gekennzeichnet**, daß die Mittel zur Erzeugung der Aufwärtsströmung der Glasschmelze quer zur konstruktiv vorgegebenen Summenströmung der Glasschmelze (10) ausgewählt sind aus der Merkmalskombination eine Stufe (17) mit in dieser angeordneten Bubblern (18).

9. Glasschmelzofen nach Anspruch 2, **dadurch gekennzeichnet**, daß bei Verwendung einer der Vorderseite (19a) der Läuterbank (19) vorgelagerten, vom Wannenooden (15) aufragende Stufe (17) diese Stufe
a) sich über die gesamte Breite des Wannenbodens (15) erstreckt,
b) eine Höhe ("H1") aufweist, die zwischen dem 0,25-Fachen und dem 0,75-Fachen der Höhe ("H2") der Läuterbank (19) gegenüber dem Wannenboden (15) beträgt,
c) sich sowohl entgegen der horizontalen Strömungsrichtung der Glasschmelze (10) als auch bis unter die Strahlungsschutzwand (8) erstreckt.

10. Glasschmelzofen nach mindestens einem der Ansprüche 2 bis 9, **dadurch gekennzeichnet**, daß innerhalb des Schmelzbereichs (3) zwischen der Abzugsöffnung (12) und der dem Läuterbereich (4) vorgelagerten Strahlungsschutzwand (8) eine weitere Strahlungsschutzwand (7) angeordnet ist, die den Schmelzbereich (3) in ein erstes Abteil (3a) mit der Abzugsöffnung (12) und in ein zweites Abteil (3b) unterteilt und eine Unterkante (7a) aufweist, die oberhalb des Beschickungsguts (13) und der Glasschmelze (10) einen Strömungskanal (7b) für eine Gegenströmung der Verbrennungsgase vom zweiten Abteil (3b) zum ersten Abteil (3a) und zur Abzugsöffnung (12) freiläßt.

11. Glasschmelzofen nach Anspruch 2, **dadurch gekennzeichnet**, daß die Strahlungsschutzwand (8) in ihrem oberen Bereich mindestens einen Strömungskanal (21) freiläßt, durch den mindestens ein Teil der Verbrennungsgase der Brenner (11a) vom Läuterbereich (4) zum Schmelzbereich (3) abströmbar ist.

12. Glasschmelzofen nach Anspruch 11, **dadurch gekennzeichnet**, daß die Strahlungsschutzwand (8) eine Unterkante (8a) besitzt, die unmittelbar oberhalb des Schmelzenspiegels (9) einen Strömungskanal (8b) freiläßt, durch den mindestens ein Teil der Verbrennungsgase der Brenner (11a) vom Läuterbereich (4) zum Schmelzbereich (3) abströmbar ist.

13. Glasschmelzofen nach Anspruch 11, **dadurch gekennzeichnet,** daß die Strahlungsschutzwand (8) mit ihrer Unterkante (8a) in die Glasschmelze (10) eintaucht und dort oberhalb der vom Wannenboden (15) aufragenden Stufe (17) mindestens eine spaltförmige Durchströmöffnung (8d) für die Glasschmelze (10) freiläßt.

14. Glasschmelzofen nach Anspruch 13, **dadurch gekennzeichnet**, daß sich die Strahlungsschutzwand (8) auf der Stufe (17) mittels mindestens einer Stütze abstützt, die zwischen jeweils zwei Durchströmöffnungen (8d) angeordnet ist, derart, daß die Summenbreite aller Durchströmöffnungen (8d) möglichst weitgehend der Breite des Wannenbodens (15) entspricht und die Durchströmöffnungen (8d) gleichmäßig über diese Breite verteilt sind.

15. Glasschmelzofen nach Anspruch 13, **dadurch gekennzeichnet**, daß zwischen der Rückseite der Strahlungsschutzwand (8) und der Vorderseite (19a) der Läuterbank (19) ein senkrechter Spalt (20) für den Durchtritt der Glasschmelze (10) vorhanden ist, in welchem Spalt (20) mindestens zwei Heizelektroden (18) angeordnet sind.

## Claims

1. Process for operating a glass melting furnace, in which a protective radiation barrier (8) is positioned between a melting zone (3) and a refining zone (4) with a refining bench (19); the barrier leaves open - above the melt surface (9) of the glass melt - at least one flow channel (8b, 21) for the back flow of at least part of the combustion gases from the refining zone (4) into the melting zone (3),
in which
at least one upward current is produced in the glass melt (10) between the middle of the melting zone (3) and the front face (19a) of the refining bench (19); this current is split - inside the glass melt (10) and before reaching the melt surface (9) - into a first part-current moving upstream into the melting zone (3) and a second part-current moving downstream towards the refining bench (19), whereby the second - downstream - current prevents a back flow of glass melt (10) from the refining zone (4) into the melting zone (3).

2. Glass melting furnace having a melting tank with a tank floor (15) and burners (11, 11a) for at least partial heating by means of fossil fuels, in which are arranged - between a charging end (2) and a removal end (6) and in the direction of movement of the glass - a melting zone (3) having at least one extraction vent (12) for combustion gases, a refining zone (4) having burners (11a) and a refining bench (19) with a front face (19a) which protrudes from the base (15) of the tank, and a homogenizing zone (5), whereby - between the melting zone (3) and the refining zone (4) - a radiation protection barrier (8) is positioned in front of the latter, this barrier leaving open above the glass melt (10) at least one flow channel (8b, 21) for a counterflow of the combustion gases from the refining zone (4) into the melting zone (3)
in which
means (16, 17, 18) are provided, between the middle of the melting zone (3) and the front face (19a) of the refining bench (19) in the direction of movement of the glass melt (10), which can produce an upward current of the glass melt (10) towards the melt surface (9) and - on the surface of the glass melt (10) - a) an upstream movement of the glass towards the charging end and b) a downstream movement towards the the refining bench (19).

3. Glass melting furnace as in Claim 2, in which the means for producing the upward current of the glass melt - at right angles to the process-determined overall flow of the glass melt (10) - are selected from the element combination of bubblers (16) in the floor of the tank (15) and a following step (17).

4. Glass melting furnace as in Claim 2, in which the means for producing the upward current of the glass melt - at right angles to the process-determined overall flow of the glass melt (10) - are selected from the element combination of bubblers (16) and heating electrodes (18) in the floor of the tank (15) without a following step (17).

5. Glass melting furnace as in Claim 2, in which the means for producing the upward current of the glass melt - at right angles to the process-determined overall flow of the glass melt (10) - are selected from the element combination of bubblers (16) in the floor of the tank (15) and heating electrodes above a following step (17).

6. Glass melting furnace as in Claim 2, in which the means for producing the upward current of the glass melt - at right angles to the process-determined overall flow of the glass melt (10) - are selected from the element combination of a step (17) which is lower in height than the refining bench (19) and which reaches from the front face (19a) of same towards the charging end (2).

7. Glass melting furnace as in Claim 2, in which the means for producing the upward current of the glass melt - at right angles to the process-determined overall flow of the glass melt (10) - are selected from the element combination of a step (17) with heating electrodes (18) arranged above it.

8. Glass melting furnace as in Claim 2, in which the means for producing the upward current of the glass melt - at right angles to the process-determined overall flow of the glass melt (10) - are selected from the element combination of a step (17) with bubblers (18) arranged inside it.

9. Glass melting furnace as in Claim 2, in which, where a step (17) is used which is positioned in front of the front face (19a) of the refining bench (19) and which protrudes from the tank floor (15), this step
a) extends across the whole width of the tank floor (15)
b) is of a height ("H1") which is between 25% and 75% of the height ("H2") of the refining bench (19) from the tank floor (15)
c) is positioned against the horizontal flow direction of the glass melt (10) and extends to beneath the radiation protection barrier (8).

10. Glass melting furnace as in at least one of Claims 2 to 9, in which a further radiation protection barrier (7) is positioned within the melting zone (3) between the extraction vent (12) and the protection barrier (8) which is in front of the refining zone (4); this second barrier divides the the melting zone (3) into a first section (3a) containing the extraction vent (12) and a second section (3b), and has a lower edge (7a) which leaves free a flow channel (7b) above the furnace charge material (13) and the glass melt (10) to permit a back flow of the combustion gases from the second section (3b) to the first section (3a) and to the extraction vent (12).

11. Glass melting furnace as in Claim 2, in which the lower part of the radiation protection barrier (8) leaves free at least one flow channel (21), through which at least part of the combustion gases from the burners (11a) can pass from the refining zone (4) to the melting zone (3).

12. Glass melting furnace as in Claim 11, in which the radiation protection barrier (8) has a lower edge (8a) which leaves free a flow channel (8b) immediately above the melt surface (9) through which at least part of the combustion gases from the burners (11a) can pass from the refining zone (4) to the melting zone (3).

13. Glass melting furnace as in Claim 11, in which the lower edge (8a) of the radiation protection barrier (8) is immersed in the glass melt (10), leaving free, above the step (17) which protrudes from the tank floor (15), at least one gap-shaped flow opening (8d) for the glass melt.

14. Glass melting furnace as in Claim 13, in which the radiation protection barrier (8) on the step (17) rests on at least one support, each of which is positioned between two flow openings (8d) in such a way that the total width of all the flow openings (8d) is, as far as possible, the same as the width of the tank floor (15) and that the flow openings (8d) are distributed evenly across this width.

15. Glass melting furnace as in Claim 13, in which there is a vertical gap (20) between the back of the radiation protection barrier (8) and the front face (19a) of the refining bench (19) to allow the throughflow of the glass melt (10), in which gap (20) are arranged at least two heating electrodes (18).

## Revendications

1. Procédé d'utilisation d'un four de fusion de verre dans lequel entre une zone de fusion (3) et une zone d'affinage (4) comportant un banc d'affinage (19) est agencée une paroi de protection antirayonnement (8) qui laisse au-dessus du niveau de fusion (9) de la fritte de verre (10) au moins un canal d'écoulement (8b, 21) libre pour un reflux d'au moins une partie des gaz de combustion depuis la zone d'affinage (4) vers la zone de fusion (3), caractérisé en ce qu'on engendre dans la fritte de verre (10), entre le milieu de la zone de fusion (3) et la partie antérieure (19a) du banc d'affinage (19), au moins un écoulement ascendant qui est divisé dans la fritte de verre (10) avant d'atteindre la surface de la fritte (9) en un premier écoulement partiel vers l'amont dans la zone de fusion (3) et en un second écoulement partiel vers l'aval en direction du banc d'affinage (19), le second écoulement partiel dirigé vers l'aval empêchant un reflux de fritte de verre (10) depuis la zone d'affinage (4) jusque dans la zone de fusion (3).

2. Four de fusion de verre comportant une cuve de fusion avec un fond de cuve (15) et des brûleurs (11, 11a) pour un chauffage au moins partiel par des combustibles fossiles, dans lequel une zone de fusion (3) comportant au moins un orifice d'évacuation (12) pour les gaz de combustion, une zone d'affinage (4) comportant des brûleurs (11a), et un banc d'affinage (19) faisant saillie du fond de cuve (15) avec une paroi antérieure (19a) et une zone d'homogénéisation (5), sont agencés entre une extrémité de chargement (2) et une extrémité d'extraction (6) dans la direction de transport du verre, une paroi de protection antirayonnement (8) étant agencée entre la zone de fusion (3) et la zone d'affinage (4), en amont de celle-ci, ladite paroi laissant au-dessus de la fritte de verre (10) au moins un canal d'écoulement (8b, 21) libre pour un écoulement inverse des gaz de combustion depuis la zone d'affinage (4) vers la zone de fusion (3), caractérisé en ce que, entre le milieu de la zone de fusion (3) et la face antérieure (19a) du banc d'affinage (19), vu en direction de transport de la fritte de verre (10), sont prévus des moyens (16, 17, 18) permettant de produire un écoulement ascendant de la fritte de verre (10) vers la surface (9) de la fritte et permettant de produire à la surface de la fritte (10) un écoulement du verre d'une part vers l'amont dans la direction de l'extrémité de chargement (2) et d'autre part vers l'aval en direction du banc d'affinage (19).

3. Four de fusion de verre selon la revendication 2, caractérisé en ce que les moyens pour produire l'écoulement ascendant de la fritte de verre transversalement à l'écoulement cumulé prédéterminé par la construction de la fritte de verre (10) sont choisis à partir de la combinaison des caractéristiques constituées par un souffleur à bulles (16) dans le fond de cuve (15) et par un gradin (17) consécutif.

4. Four de fusion de verre selon la revendication 2, caractérisé en ce que les moyens pour produire l'écoulement ascendant de la fritte de verre transversalement à l'écoulement cumulé prédéterminé par la construction de la fritte de verre (10) sont choisis à partir de la combinaison des caractéristiques constituées par un souffleur à bulles (16) et par des électrodes chauffantes (18) dans le fond de cuve (15) sans gradin (17) consécutif.

5. Four de fusion de verre selon la revendication 2, caractérisé en ce que les moyens pour produire l'écoulement ascendant de la fritte de verre transversalement à l'écoulement cumulé prédéterminé par la construction de la fritte de verre (10) sont choisis à partir de la combinaison des caractéristiques constituées par un souffleur à bulles (16) dans le fond de cuve (15) et par des électrodes chauffantes (18) au-dessus d'un gradin (17) consécutif.

6. Four de fusion de verre selon la revendication 2, caractérisé en ce que les moyens pour produire l'écoulement ascendant de la fritte de verre transversalement à l'écoulement cumulé prédéterminé par la construction de la fritte de verre (10) sont choisis à partir de la combinaison des caractéristiques constituées par un gradin (17) qui s'étend à plus faible hauteur que celle du banc d'affinage depuis sa face antérieure (19a) en direction de l'extrémité de chargement (2).

7. Four de fusion de verre selon la revendication 2, caractérisé en ce que les moyens pour produire l'écoulement ascendant de la fritte de verre transversalement à l'écoulement cumulé prédéterminé par la construction de la fritte de verre (10) sont choisis à partir de la combinaison des caractéristiques constituées par un gradin (17) avec des électrodes chauffantes (18) agencées au-dessus de celui-ci.

8. Four de fusion de verre selon la revendication 2, caractérisé en ce que les moyens pour produire l'écoulement ascendant de la fritte de verre transversalement à l'écoulement cumulé prédéterminé par la construction de la fritte de verre (10) sont choisis à partir de la combinaison des caractéristiques constituées par un gradin (17) avec des souffleurs à bulles (18) agencé dans celui-ci.

9. Four de fusion de verre selon la revendication 2, caractérisé en ce que lorsqu'on utilise un gradin (17) monté devant la face antérieure (19a) du banc d'affinage (19) et faisant saillie hors du fond de cuve (15), ce gradin:
a) s'étend sur toute la largeur du fond de cuve (15),
b) présente une hauteur ("H1") qui constitue entre 0,25 et 0,75 fois la hauteur ("H2") du banc d'affinage (19) par rapport au fond de cuve (15),
c) s'étend non seulement à l'encontre de la direction d'écoulement horizontale de la fritte de verre mais aussi jusqu'au-dessous de la paroi de protection antirayonnement (8).

10. Four de fusion de verre selon au moins l'une quelconque des revendications 2 à 9, caractérisé en ce qu'à l'intérieur de la zone de fusion (3) entre l'orifice d'évacuation (12) et la paroi de protection antirayonnement (8) montée devant la zone d'affinage (4) est agencée une autre paroi de protection antirayonnement (7) qui divise la zone de fusion (3) en un premier compartiment (3a) comportant l'orifice d'évacuation (12) et en un second compartiment (3b), et qui comporte un bord inférieur (7a) qui laisse au-dessus du produit de chargement (13) et de la fritte de verre (10) un canal d'écoulement (7b) libre pour un écoulement inverse des gaz de combustion depuis le second compartiment (3b) vers le premier compartiment (3a) et vers l'orifice d'évacuation (12).

11. Four de fusion de verre selon la revendication 2, caractérisé en ce que la paroi de protection antirayonnement (8) laisse dans sa partie supérieure au moins un canal d'écoulement (21) libre, à travers lequel au moins une partie des gaz de combustion des brûleurs (11a) peut s'écouler depuis la zone d'affinage (4) vers la zone de fusion (3).

12. Four de fusion de verre selon la revendication 11, caractérisé en ce que la paroi de protection antirayonnement (8) possède un bord inférieur (8a) qui laisse un canal d'écoulement (8b) libre directement au-dessus de la surface (9) de la fritte, à travers lequel au moins une partie des gaz de combustion des brûleurs (11a) est susceptible de s'écouler depuis la zone d'affinage (4) vers la zone de fusion (3).

13. Four de fusion de verre selon la revendication 11, caractérisé en ce que la paroi de protection antirayonnement (8) plonge avec son bord inférieur (8a) dans la fritte de verre (10) et laisse dans celle-ci, au-dessus du gradin (17) faisant saillie hors du fond de cuve (15) au moins un orifice de passage d'écoulement (8d) libre en forme de fente, pour la fritte de verre (10).

14. Four de fusion de verre selon la revendication 13, caractérisé en ce que la paroi de protection antirayonnement (8) prend appui sur le gradin (17) au moyen d'au moins un support qui est agencé entre deux orifices de passage d'écoulement (8d) respectifs, de telle sorte que la largeur cumulée de tous les orifices de passage d'écoulement (8d) correspond le plus amplement possible à la largeur du fond de cuve (15) et que les orifices de passage d'écoulement (8d) sont répartis régulièrement sur cette largeur.

15. Four de fusion de verre selon la revendication 13, caractérisé en ce que, entre la face postérieure de la paroi de protection antirayonnement (8) et la face antérieure (19a) du banc d'affinage (19) se trouve une fente (20) verticale pour le passage de la fritte de verre (10), fente (20) dans laquelle sont agencées au moins deux électrodes chauffantes (18).
